# EUROPÄISCHE PATENTSCHRIFT

(11) **EP 0 637 860 B1**
(45) Veröffentlichungstag und Bekanntmachung des Hinweises auf die Patenterteilung: **18.09.1996**
(21) Anmeldenummer: 94110076.0
(22) Anmeldetag: 28.06.1994
(51) Int. Cl.: H01S 3/06, H04B 10/16

(54) **Faseroptischer Verstärker mit einer Vorrichtung zur Überwachung der Pump- und Eingangsleistung**
Fiber optic amplifier with device for monitoring the pump and input power
Amplificateur à fibres optiques avec dispositif de contrôle de la puissance de pompage et d'entrée

(30) Priorität: 01.07.1993 DE 4321856
(43) Veröffentlichungstag der Anmeldung: 08.02.1995
(73) Patentinhaber: Alcatel SEL Aktiengesellschaft, D-70435 Stuttgart (DE); ALCATEL N.V., NL-2288 BH Rijswijk (NL)
(72) Erfinder: Bülow, Henning, Dr., D-71638 Ludwigsburg (DE); Otterbach, Jürgen, D-71229 Leonberg (DE)
(74) Vertreter: Kugler, Hermann, Dipl.-Phys.

(56) Entgegenhaltungen:
- EP-A- 0 395 277
- EP-A- 0 507 367
- EP-A- 0 517 503
- PATENT ABSTRACTS OF JAPAN vol. 17, no. 706 (E-1483) 22. Dezember 1993 & JP-A-05 243 641 (NEC CORP) 21. September 1993

## Beschreibung

Die Erfindung betrifft einen faseroptischen Verstärker.

Faseroptische Verstärker nach dem Oberbegriff des Anspruchs 1 oder 2 sind bekannt, z.B. aus Augé J., et al, "Fortschritte im Bereich der optischen Verstärkung", Elektrisches Nachrichtenwesen, 4. Quartal 1992, Seiten 37 bis 44. Dort ist ein faseroptischer Verstärker gezeigt, der zwei Pumplichtquellen, die Pumplicht emittieren, zwei Pumplichtkoppler und ein mit Erbium-Ionen dotiertes Lichtwellenleiterstück hat.

Faseroptische Verstärker dienen in optischen Übertragungssystemen mit Lichtwellenleitern dazu, in den Lichtwellenleitern geführte optische Signale zu verstärken.

Durch das Pumplicht werden die in dem Lichtwellenleiterstück enthaltenen Erbium-Ionen, die sich in energetischen Grundzustand befinden, in einen angeregten Zustand überführt, von dem aus sie, entweder durch spontane oder stimulierte Emission, wieder in den Grundzustand übergehen. Die stimulierte Emission wird durch das durch das Lichtwellenleiterstück laufende zu verstärkende optische Signal angeregt. Durchläuft kein optisches Signal das Lichtwellenleiterstück, erfolgt der Übergang in den Grundzustand spontan, wobei die Energiedifferenz zwischen Grundzustand und angeregtem Zustand in Strahlung umgewandelt wird, die sich entlang des Lichtwellenleiterstücks ausbreitet.

Bei dieser Ausbreitung wird diese spontane Strahlung innerhalb des Lichtwellenleiterstücks verstärkt. An den beiden Enden des Lichtwellenleiterstücks tritt die durch verstärkte spontane Emission (engl.: amplified spontaneous emission, ASE) entstandene Strahlung aus. Diese Strahlung wird im folgenden als ASE bezeichnet. Die Wellenlänge dieser ASE liegt bei Erbium-dotierten faseroptischen Verstärkern im Wellenlängenbereich um 1550 nm. Sie liegt also im Wellenlängenbereich des optischen Signals.

In diesen Übertragungssystemen ist es wichtig, Informationen über die Übertragungsstrecke und den Betriebszustand der faseroptischen Verstärker zu haben, um die Übertragung selbst und die Übertragungsqualität sicherzustellen.

Zu diesen Informationen gehört z.B. die Information, ob eine Eingangsleistung für den faseroptischen Verstärker vorhanden ist und wie groß dessen Ausgangsleistung ist.

Ist keine Eingangsleistung vorhanden, kann dies z.B. auf einen Faserbruch hinweisen. In diesem Fall ist dafür zu sorgen, daß die Übertragungsstrecke augensicher ist, d.h. daß zu keinem Zeitpunkt das Auge einer Person, die absichtlich oder unabsichtlich in einen unterbrochenen Lichtwellenleiter schaut, gefährdet sein darf Um das zu gewährleisten, muß das System oder einzelne Systembestandteile im Falle eines Faserbruchs abgeschaltet werden.

Aus der oben genannten Literatur ist bekannt, die Eingangs- und Ausgangsleistung eines faseroptischen Verstärkers zu überwachen, um dessen Verstärkung zu regeln. Dort wird jeweils ein Teil der Eingangs- und Ausgangsleistung durch Koppler, die Bestandteil des faseroptischen Verstärkers sind, ausgekoppelt und von Photodioden detektiert.

Bei der Übertragung von Analogsignalen, wie es z.B. bei TV-Signalen der Fall ist, herrschen hohe Signalleistungen vor. Die davon ausgekoppelte Signalleistung ist ohne großen Aufwand zu detektieren.

Anders verhält es sich, wenn die Signalleistung kleiner wird, wie es z.B. bei der Digitalübertragung der Fall ist. Die ausgekoppelte Signalleistung ist entsprechend kleiner und der Aufwand, diese kleine Signalleistung zu detektieren, steigt.

Es ist Aufgabe der Erfindung, einen faseroptischen Verstärker anzugeben, bei dem auch kleine Eingangsleistungen ohne großen Aufwand überwacht werden können. Diese Aufgabe wird mit den im Anspruch 1 oder 2 genannten Merkmalen gelöst.

Vorteilhaft an der Erfindung ist, daß eindeutig zwischen einem Faserbruch und abgeschaltetem Sendelaser unterschieden werden kann. Desweiteren ist vorteilhaft, daß die tatsächliche Pumplichtleistung überwacht werden kann, sofern das Eingangssignal abgeschaltet ist.

Die Erfindung wird nun anhand der Zeichnungen näher erläutert. Es zeigen:
- Fig. 1: ein erstes Ausführungsbeispiel eines faseroptischen Verstärkers,
- Fig. 2: ein zweites Ausführungsbeispiel eines faseroptischen Verstärkers,
- Fig. 3: ein Diagramm, das die am Anschluß A3 detektierte ASE-Leistung als Funktion der Eingangsleistung zeigt.

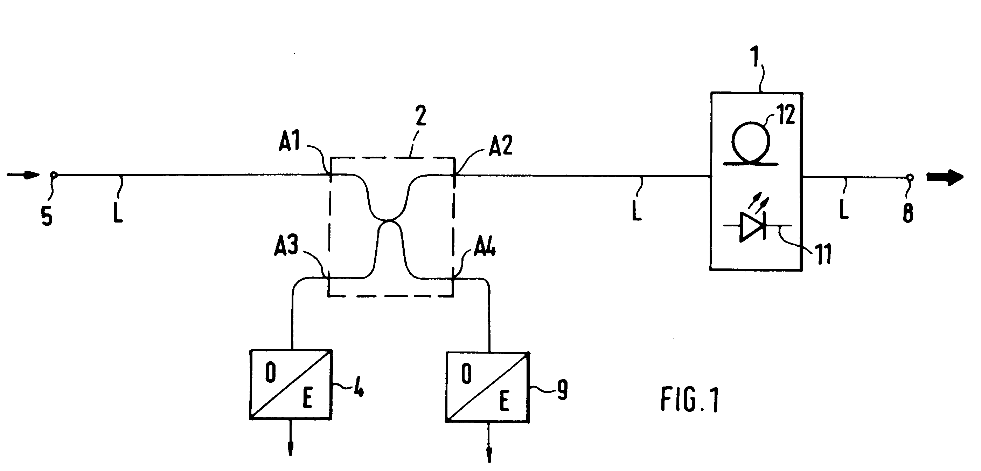

In Fig. 1 ist ein faseroptischer Verstärker in seinem für die Erfindung relevanten prinzipiellen Aufbau gezeigt. Sein Verstärkungsteil 1, der ein dotiertes Lichtwellenleiterstück 12 und eine Pumplichtquelle 11 hat, ist schematisch dargestellt; detalliertere Darstellungen können der Literatur, z.B. Augé J., entnommen werden. Eventuell vorhandene optische Isolatoren und Stromversorgungen sind nicht gezeigt.

Ein zu verstärkendes optisches Signal tritt an einem Eingang 5 in den faseroptischen Verstärker ein und verläßt diesen verstärkt an einem Ausgang 8. Die Verstärkung und die Richtung des optischen Signals sind durch unterschiedlich große Pfeile an Ein- und Ausgang des faseroptischen Verstärkers angedeutet.

Der faseroptische Verstärker hat neben dem Verstärkungsteil 1 einen Koppler 2, der vier Anschlüsse A1 bis A4 hat, einen ersten Optisch-Elektrisch Wandler 4 und einen zweiten Optisch-Elektrisch Wandler 9. Derartige Koppler sind z.B. beschrieben in: Grau, G., "Optische Nachrichtentechnik", zweite Auflage, Berlin, Heidelberg, New York, Tokyo, Springer Verlag, 1986, Seiten 296 bis 302.

Das zu verstärkende optische Signal wird über den Eingang 5 des faseroptischen Verstärkers einem Anschluß A1 des Kopplers 2 zugeführt. Ein Anschluß A2 des Kopplers 2 ist mit dem Verstärkungsteil 1 verbunden, der das optische Signal verstärkt. Das verstärkte optische Signal steht am Ausgang 8 des faseroptischen Verstärkers zur Verfügung, der mit dem Verstärkungsteil 1 verbunden ist. Zwischen dem Verstärkungsteil 1 und dem Ausgang 8 kann noch ein Koppler und ein optischer Isolator vorhanden sein, die nicht dargestellt sind.

Der erste Optisch-Elektrisch Wandler 4 ist mit einem Anschluß A3 des Kopplers 2 verbunden, an dem Licht austritt, das sich entgegen der Richtung des Signals ausbreitet.

Der zweite Optisch-Elektrisch Wandler 9 ist mit einem Anschluß A4 des Kopplers 2 verbunden, an dem ein Teil des Lichts austritt, das sich im faseroptischen Verstärker in Richtung des Signals ausbreitet. Die Verbindung der einzelnen Bestandteile erfolgt über Lichtwellenleiter L.

Aus Gründen der Vereinfachung wird für jede optische Strahlung, sichtbar oder nicht sichtbar, der Begriff Licht verwendet.

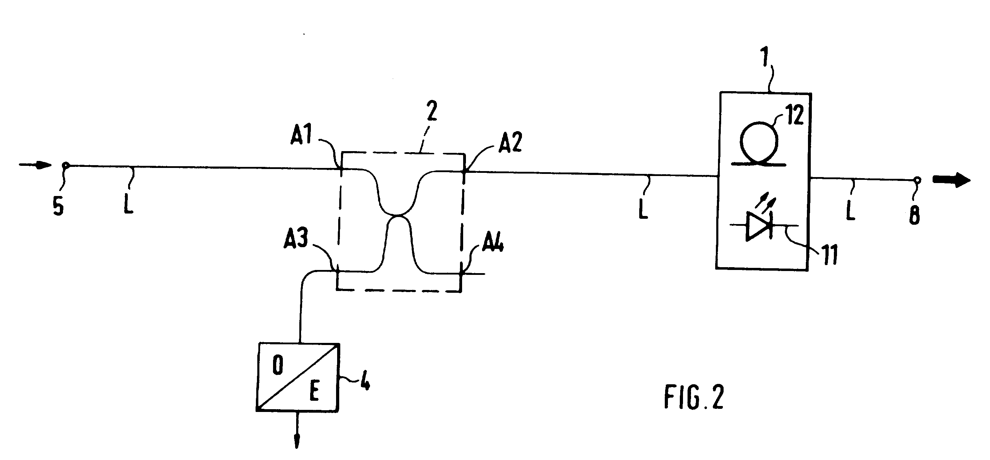

Das in Fig. 2 gezeigte zweite Ausführungsbeispiel eines faseroptischen Verstärkers unterscheidet sich von dem in Fig. 1 gezeigten nur dadurch, daß der zweite Optisch-Elektrisch Wandler 9 nicht vorhanden ist.

Das am Ausgang eines Optisch-Elektrisch Wandler 4, 9 vorhandene elektrische Signal wird in einem im faseroptischen Verstärker zur elektronischen Regelung vorhandenen Mikroprozessor ausgewertet. Dies ist durch den von dem Wandler 4, 9 abgehenden Pfeil angedeutet.

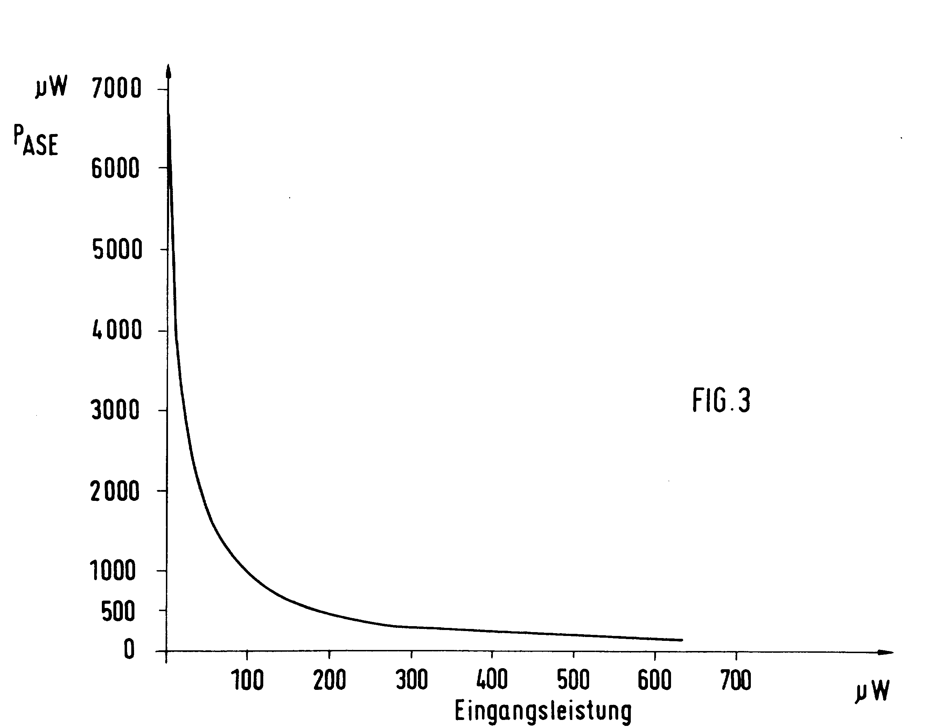

In Fig. 3 ist die Abhängigkeit der ASE-Leistung P_{ASE} von der Eingangsleistung des faseroptischen Verstärkers gezeigt. Auf der Ordinate ist die ASE-Leistung P_{ASE} in µW, die sich entgegen der Richtung des optischen Signals ausbreitet, und an der Abszisse ist die Eingangsleistung des faseroptischen Verstärkers in µW aufgetragen. Die ASE-Leistung nimmt mit zunehmender Eingangsleistung wie gezeigt ab.

In jedem der gezeigten Ausführungsbeispiele tritt an dem Anschluß A3 ein Teil des Lichts aus, das sich im faseroptischen Verstärker entgegen der Richtung des optischen Signals ausbreitet. Dieses Licht ist z.B. ASE, zusätzlich kann aber auch nicht absorbiertes Pumplicht austreten, wenn das Pumplicht entgegen der Richtung des optischen Signals zugeführt wird. In diesem Fall kann dieses Pumplicht durch ein wellenlängenselektives Filter vor dem Optisch-Elektrisch Wandler 4 gesperrt werden, so daß nur ASE detektiert wird.

An dem Anschluß A4 des Kopplers 2 tritt ein Teil des Lichts aus, das sich im faseroptischen Verstärker in Richtung des optischen Signals ausbreitet. Der austretende Anteil dieses Lichts wird von dem Optisch-Elektrisch Wandler 9 detektiert. Bei den eingangs genannten faseroptischen Verstärkern wird damit die Eingangsleistung überwacht.

Die Auswertung der detektierten Signale geschieht folgendermaßen:
- Da die ASE nur auftritt, wenn das Lichtwellenleiterstück gepumpt wird, kann bei bewußter Abschaltung der Eingangsleistung die Pumpleistung überprüft werden. Wird bei abgeschalteter Eingangsleistung eine hohe ASE-Leistung gemessen, bedeutet dies, daß die Pumplichtquelle fehlerfrei arbeitet. Fig. 3 zeigt, daß eine ASE-Leistung von 6500 µW gemessen wird, wenn die Eingangsleistung Null ist. Bei sinkender Pumpleistung sinkt auch die ASE-Leistung.
- Durch das Messen der ASE-Leistung ist nicht nur eine Ja/Nein-Aussage, sondern auch eine quantitative Aussage über die Eingangsleistung möglich. Bei einer ASE-Leistung von 1000 µW beträgt die Eingangsleistung etwa 100 µW.

Wie Fig. 3 zeigt ist bei geringer Eingangsleistung die ASE-Leistung groß. Von Vorteil ist, daß diese große ASE-Leistung einfacher zu detektieren ist als eine kleine Eingangsleistung.

Besonders vorteilhaft an dem ersten Ausführungsbeispiel (Fig. 1) ist, daß damit das Erkennen eines Faserbruchs möglich ist:
Liegt ein Faserbruch vor dem Eingang 5 vor, wird ein Teil der ASE (ca. 4% bei einem geraden Bruch) an der Bruchstelle reflektiert und der Optisch-Elektrisch Wandler 9 detektiert fälschlicherweise eine Eingangsleistung. Detektiert jedoch der Optisch-Elektrisch Wandler 4 gleichzeitig eine große ASE-Leistung, bedeutet dies, daß die echte Eingangsleistung sehr klein oder sogar Null ist. Durch das Auswerten der elektrischen Signale der Optisch-Elektrisch Wandler 4, 9 ist eindeutig ein Feststellen eines Faserbruchs möglich. Im Falle, daß der erste 9 und der zweite Optisch-Elektrisch Wandler 4 jeweils ein elektrisches Signal abgeben, das größer als ein Schwellenwert ist, gibt eine Auswertevorrichtung (Mikroprozessor) ein Signal ab, das einen Faserbruch anzeigt.

Aufgrund dieser Informationen kann das Übertragungssystem beeinflußt werden, d.h. das System kann, z.B. bei einem Faserbruch, ganz oder teilweise abgeschaltet werden.

## Patentansprüche

1. Faseroptischer Verstärker zur Verstärkung eines optischen Signals, der einen Koppler (2) mit vier Anschlüssen hat,
**dadurch gekennzeichnet**, daß zum Empfang von Licht im Wellenlängenbereich des optischen Signals ein Optisch-Elektrisch Wandler (4) vorhanden ist, der mit einem Anschluß (A3) des Kopplers (2) verbunden ist, an dem ein Teil des Lichts austritt, das sich im faseroptischen Verstärker entgegen der Richtung des optischen Signals ausbreitet.

2. Faseroptischer Verstärker zur Verstärkung eines optischen Signals, der einen Koppler (2) mit vier Anschlüssen und einen ersten Optisch-Elektrisch Wandler (9), der mit einem Anschluß des Kopplers (2) verbunden ist, an dem ein Teil des optischen Signals austritt, hat,
**dadurch gekennzeichnet**, daß zum Empfang von Licht im Wellenlängenbereich des optischen Signals ein zweiter Optisch-Elektrisch Wandler (4) vorhanden ist, der mit einem Anschluß (A3) des Kopplers (2) verbunden ist, an dem ein Teil des Lichts austritt, das sich im faseroptischen Verstärker entgegen der Richtung des optischen Signals ausbreitet (Fig. 1).

3. Faseroptischer Verstärker nach Anspruch 2,
**dadurch gekennzeichnet**, daß eine Auswertevorrichtung vorhanden ist, die im Falle, daß der erste (9) und der zweite Optisch-Elektrisch Wandler (4) ein elektrisches Signal abgibt, das größer als ein Schwellenwert ist, einen Faserbruch anzeigt.

## Claims

1. A fiber-optic amplifier for amplifying an optical signal, comprising a four-port coupler (2),
**characterized in** that for the reception of light in the wavelength region of the optical signal, an optical-to-electrical transducer (4) is provided which is connected to a port (A3) of the coupler (2) from which emerges a portion of the light which propagates in the fiber-optic amplifier in a direction opposite to that of the optical signal.

2. A fiber-optic amplifier for amplifying an optical signal, comprising a four-port coupler (2) and a first optical-to-electrical transducer (9) which is connected to a port of the coupler (2) from which a portion of the optical signal emerges,
**characterized in** that for the reception of light in the wavelength region of the optical signal, a second optical-to-electrical transducer (4) is provided which is connected to a port (A3) of the coupler (2) from which emerges a portion of the light which propagates in the fiber-optic amplifier in a direction opposite to that of the optical signal (Fig. 1).

3. A fiber-optic amplifier as claimed in claim 2,
characterized in that an evaluating device is provided which indicates a fiber break if the first and second optical-to-electrical transducers (9, 4) provide an electrical signal greater than a threshold value.

## Revendications

1. Amplificateur à fibres optiques pour l'amplification d'un signal optique, comportant un coupleur (2) muni de quatre bornes, caractérisé en ce qu'il existe pour la réception de la lumière, dans la gamme d'ondes du signal optique, un convertisseur optoélectronique (4) raccordé une borne (A3) du coupleur (2) au niveau de laquelle émerge une partie de la lumière qui se diffuse dans l'amplificateur à fibres optiques dans le sens opposé à celui du signal optique.

2. Amplificateur à fibres optiques pour l'amplification d'un signal optique, comportant un coupleur (2) muni de quatre bornes et un premier convertisseur optoélectronique (9) raccordé à une borne dit coupleur (2) au niveau duquel émerge une partie du signal optique, caractérisé en ce qu'il est prévu pour la réception de la lumière, dans la gamme d'ondes du signal optique, un deuxième convertisseur optoélectronique (4) qui est raccordé à une borne (A3) du coupleur (2) au niveau de laquelle émerge une partie de la lumière qui se diffuse dans l'amplificateur à fibres optiques dans le sens opposé à celui du signal optique (fig. 1).

3. Amplificateur à fibres optiques selon la revendication 2, caractérisé en ce qu'il existe un dispositif d'évaluation qui, dans le cas où les premier (9) et deuxième (4) convertisseurs optoélectroniques émettent un signal électrique supérieur à une valeur de seuil, indique une rupture de fibres.
